# EUROPÄISCHE PATENTSCHRIFT

(11) **EP 1 538 223 B1**
(45) Veröffentlichungstag und Bekanntmachung des Hinweises auf die Patenterteilung: **14.09.2016**
(21) Anmeldenummer: 04026168.7
(22) Anmeldetag: 04.11.2004
(51) Int. Cl.: C04B 35/532, C21B 7/06, C04B 35/52, F27D 1/00

(54) **Kohlenstoffsteine mit Mikroporosität oder Supermikroporosität und Verfahren zu deren Herstellung**
Carbon bricks with micro-porosity or supermicro-porosity and method for manufacturing
Briques de carbone avec micro-porosité ou supermicro-porosité et procédé de leur fabrication

(30) Priorität: 03.12.2003 DE 10356376
(43) Veröffentlichungstag der Anmeldung: 08.06.2005
(73) Patentinhaber: SGL Carbon SE, 65201 Wiesbaden (DE)
(72) Erfinder: Mittag, Jörg, Dr., 65187 Wiesbaden (DE)

(56) Entgegenhaltungen:
- GB-A- 688 126
- GB-A- 720 125
- GB-A- 1 485 526
- US-A- 3 083 111
- RINGEL, JANZ, TRECKER: "Neuzustellung des Hochofens II der Stahlwerke Bremen", STAHL UND EISEN, vol. 120, no. 6, 16 June 2000 (2000-06-16) , pages 27-32,
- ASBRAND M ET AL: "Development of a supermicroporous, low thermal conductive carbon grade as blast furnace lining", 45 INTERNATIONAL COLLOQUIM ON REFRACTORIES IN AACHEN,, 1 January 2002 (2002-01-01), pages 48-51, XP008124362,
- SERRANO-TALAVERA, MUÑOZ-GUILLENA, LINARES-SOLANO, SALINAS-MARTÍNEZ DE LECEA: "Activated Carbons from Spanish Coals. 3. Preoxidation Effect on Anthracite Activation", ENERGY AND FUELS, vol. 11, 1 July 1996 (1996-07-01), pages 785-791,
- CAZORLA-AMORÓS, RIBES-PÉREZ, ROMÁN-MARTÍNEZ, LINARES-SOLANO: "Selective Porosity development by Calcium-Catalysed Carbon Gasification", CARBON, vol. 34, no. 7, 22 June 1995 (1995-06-22), - 24 January 1996 (1996-01-24), pages 869-878,

## Beschreibung

Die Erfindung betrifft dauerhafte Kohlenstoffsteine zur feuerfesten Auskleidung von Reduktionsöfen und Schmelzöfen sowie ein Verfahren zu deren Herstellung.

Im unteren Bereich zum Beispiel eines Hochofens, wo sich u. a. das geschmolzene Metall sammelt, insbesondere im Bereich unterhalb des Eisenabstichlochs, wird die Oberfläche der feuerfesten Ausmauerung vom geschmolzenen Metall unter einem Druck von mehreren Bar und bei einer Temperatur von 1400 bis 1600°C ständig umspült. Die feuerfeste Ausmauerung dieses Bereiches besteht aus feuerfesten Steinen entweder auf der Basis von Hochtemperaturoxiden oder auf der Basis von Kohlenstoffen. Die Ausmauerung wird einerseits durch die äußere Kühlung des Hochofens geschützt. Andererseits wird die Ausmauerung zunehmend beansprucht, wobei die Größe des Hochofenvolumens, der Betrieb des Hochofens unter hohem Druck und z. B. der Hochgeschwindigkeitsabstich zu nennen sind. Die zunehmende Beanspruchung führte zu verstärktem thermischem Verschleiß der Kohlenstoffsteine. Die wesentlichen Ursachen für diesen verstärkt auftretenden thermischen Verschleiß sind:
1. Die Löslichkeit von Kohlenstoff im kohlenstoff-ungesättigten Roheisen und
2. das Eindringen von geschmolzenem Eisen in die Poren der Kohlenstoffsteine.

So wird unter anderem versucht, den Kohlenstoffanteil in den feuerfesten Steinen möglichst gering zu halten und diese auf Basis von Hochtemperaturoxiden herzustellen. In DE 37 15 178 A1 wird ein Verfahren zur Herstellung eines solchen Oxid-Kohlenstoff-Steins beschrieben, welcher im Wesentlichen aus mit Kohlenstoff gebundenen Oxidpartikeln besteht. Dabei werden feine Partikel eines refraktären Oxids und/ oder des entsprechenden Hydroxids zunächst mit geschmolzenem Pech dispergiert und gebrannt. Das erhaltene Material wird im Anschluss zerkleinert und klassiert. Dieses Sekundärmaterial wird anschließend wieder mit Pech gemischt, geformt und gebrannt. Das beschriebene Verfahren, welches auch als Doppelt-Grünfertigung bezeichnet wird, ist gegenüber der einfachen Grünfertigung aufwendig und die erhaltenen Oxid-Kohlenstoff-Steine weisen trotz ihres geringeren Kohlenstoffgehalts keine deutlich verlängerten Standzeiten auf.

Desweiteren enthält die Literatur bereits verschiedene Vorschläge, die Auflösung von Kohlenstoff durch Verwendung solcher Kohlenstoff-Sorten zu verhindern, die eine geringe Löslichkeit im geschmolzenen Eisen aufweisen oder von Kohlenstoff-Sorten, die einen Lösungsinhibitorzusatz enthalten.

Um das früher, beim Einsatz kleiner Steinformate häufige, Eindringen von geschmolzenem Eisen in die Fugen der Ausmauerung zu vermindern, wurde die Anzahl der Fugen reduziert, indem die feuerfesten Steine in großen Formaten eingesetzt wurden. Da Kohlenstoffsteine einen niedrigen thermischen Ausdehnungskoeffizienten und eine vergleichsweise hohe Wärmeleitfähigkeit haben, haben große Kohlenstoffsteine gegenüber großen oxidischen feuerfesten Steinen einen Vorteil, der sich in weniger Abplatzungen, Rissen etc. ausdrückt. Der zugehörige Fachausdruck für diesen Vorteil der Kohlenstoffsteine ist die (gute) Temperaturwechselbeständigkeit.
Um das Eindringen von geschmolzenem Eisen in die Poren der Kohlenstoffsteine zu vermindern, ist es notwendig, die Größe der Poren zu verringern. Geschmolzenes Eisen kann in Poren bis etwa 5 µm Durchmesser eindringen.

Große Kohlenstoffsteine, die nach üblichen bekannten Verfahren hergestellt wurden, enthalten zahlreiche Poren mit einem Durchmesser von mehr als 5 µm. Die zugehörige Porendurchmesserverteilung wird im folgenden mit dem Begriff Standard-Porendurchmesserverteilungen belegt. Solche Steine können im Hochofenbetrieb stark dem Eindringen des flüssigen Eisens unterliegen.
Ein bekanntes Verfahren zur Herstellung der Kohlenstoffsteine mit Standard-Porendurchmesserverteilungen besteht darin, Stoffgemische mit einer Korngrößenverteilung einzusetzen, bei der der Anteil an feinkörnigen Teilchen überwiegt. Der hohe Anteil an feinkörnigen Teilchen verlangt jedoch auch einen erhöhten Zusatz von Pech oder anderen Bindemitteln, was wiederum zur Entstehung von mehr Poren führt. Außerdem werden die Poren nicht kleiner als etwa 5 µm. Aus vorstehenden Gründen bereitet demnach die Herstellung von großen Kohlenstoffsteinen mit feinen Poren beträchtliche Schwierigkeiten.

Eine detaillierte Beschreibung der physikalischen Zusammenhänge aber auch praktischer Untersuchungsergebnisse findet sich in Stahl und Eisen 113 (1993), Seiten 35 bis 41. Bei der Zerlegung von ausgeblasenen Hochöfen wurde festgestellt, dass das Eindringen unter ungünstigen Umständen sogar in Poren mit etwa 3 µm Durchmesser erfolgt. Natürlich ist das Eindringen des geschmolzenen Eisens umso geringer, je kleiner die Poren und je geringer der Druck aus der Schmelze sind. Eine Verminderung der Porengröße auf höchstens 5 µm schaltet ein Eindringen des Eisens im wesentlichen aus und verlängert die Lebensdauer der Steine beträchtlich. In genannter Veröffentlichung wurde auch die dem Fachmann geläufige Erkenntnis dargestellt, dass die Zugabe von Al₂O₃ zu Kohlenstoffsteinen die Porengrößenverteilung kaum beeinflusst, während diese durch Zugabe von Silizium ein deutlich verkleinerter mittlerer Porenradius einstellbar ist.

So wird in der deutschen Offenlegungsschrift DE 29 50 993 wird beschrieben, wie mit Verbindungen aus Silizium, Kohlenstoff, Stickstoff und Sauerstoff Poren in den Kohlenstoffsteinen deutlich verkleinert werden. In der Folge nahmen die Permeabilität, das Eindringen flüssigen Eisens in die Poren und damit der thermische Verschleiß deutlich ab. Insgesamt wurde mit dem Einbau solcher Steine die Betriebsdauer der feuerfesten Auskleidung des Gestells verlängert.

In der amerikanischen Patentschrift US 3,083,111 wird der Silizium-Zusatz zu Kohlenstoffsteinen beschrieben, die in metallurgischen Öfen wie Hochöfen oder wie Zellen zur Aluminiumelektrolyse eingesetzt werden. Dieser Zusatz von Silizium zum Kohlenstoff-Stein vermindert den Alkaliangriff, der vorzugsweise aus den flüssigen Schlacken kommt. Die Wirkung des Siliziums wird im Einzelnen nicht beschrieben, aber es wird dargestellt, dass die Einlagerung von Alkalien in den Kohlenstoff eine Quellung des Kohlenstoffes bzw. des Kohlenstoffsteines bewirkt. Damit kann der Stein bzw. die Ausmauerung des metallurgischen Ofens gesprengt werden. Die Wirkung des Siliziums, das sich bei der Herstellung der Kohlenstoffsteine in Siliziumcarbid umsetzt, besteht offenbar in einer Verminderung der Schädigung des Kohlenstoffs durch Alkalien.

In einer Veröffentlichung in Stahl und Eisen 113, 1993, Nr. 11, Seiten 35 bis 41, wird das Silizium den Kohlenstoffsteinen wegen seiner Wirkung als Kleinporenbildner zugegeben. Offenbar hat das Silizium zwei verschiedene Wirkungen, die beide die Haltbarkeit der Kohlenstoffsteine steigern: Einerseits ist es die vermehrte Bildung feiner Poren im Bindekoks der Kohlenstoffsteine und andererseits erhöht das aus dem Silizium entstandene Siliziumcarbid die Resistenz des Kohlenstoffs gegenüber Alkalien.

In der deutschen Offenlegungsschrift DE 24 32 992 werden oxidische feuerfeste Steine für den Boden einer Unterherdkonstruktion eines metallurgischen Ofens (Hochofens) beschrieben. Gemäß Anspruch 3 bestehen diese Steine aus einem der Stoffe ZrSiO₄, Al₂O₃ und Mullit. Dabei besteht der Mullit aus 70 bis 80% Al₂O₃ und 20 bis 30% SiO₂ (Anspruch 4), welcher schmelzgegossen ist (Anspruch 5). Gemäß dieser Schrift werden für den Boden des Herdes oxidische feuerfeste Steine und für die Wandung des Herdes Kohlenstoffsteine verwendet. Im Gegensatz zur Offenlegungsschrift DE 24 32 992 wird der Mullit in der vorliegenden Anmeldung jedoch als integraler und fein verteilter Bestandteil des Kohlenstoffsteins genutzt. Die Wirkung des Mullits wird weiter unten beschrieben.

In einer weiteren Schrift von Asbrand, Hiltmann, Mittag, Ostermann vom 45. International Colloquium on Refractories in Aachen aus dem Jahr 2002 wird über mikroporöse und supermikroporöse Kohlenstoffsteine berichtet. Die Porenverteilungen solcher Steine werden durch Zugabe von Silizium und Aluminiumoxid erreicht, siehe Seite 50, rechte Spalte oben. Dabei werden die Begriffe "Mikroporosität" und "Supermikroporosität" anhand des kumulierten Porenvolumens derjenigen Poren definiert, die größer als 1 mm sind, wobei bei mikroporösen Materialien 2 bis 5 % des kumulierten Porenvolumens größer als 1 mm sind und bei supermikroporösen Materialien weniger als 2 % größer als 1 mm sind. Diese Definition wird für die vorliegende Erfindung übernommen.

Die GB1485526A beschreibt ein kohlenstoffhaltiges Feuerfestmaterial, das im trockenen Zustand 10 bis 99 Gew.-% calcinierten Anthrazit und/oder "Thermoanthrazit" enthält, sowie 1 bis 50 Gew.-% Bindemittel. Das Feuerfestmaterial kann bis zu 30 Gew.-% eines Nichtkohlenstoffmaterils enthalten, wie etwa Mullit. Von einer speziellen Porosität ist dort allerdings nicht die Rede.

### Definitionen

◆ Das Zustandekommen einer *Standard-Porendurchmesserverteilung* wurde auf Seite 2 dieser Schrift erläutert. Eine typische Summenverteilung ist in Fig. 1 wiedergegeben.
◆ Typische Summendarstellungen der Porendurchmesserverteilungen von *makroporösen* und *supermikroporösen* Kohlenstoffsteinen sind in den Fig. 2 und 3 wiedergegeben.
◆ In die grüne Mischung für die Kohlenstoffsteine wird das Naturprodukt *Kaolin* als Rohstoff zugesetzt. Die chemische Zusammensetzung des Kaolins, insbesondere der Wassergehalt, unterliegt Schwankungen. Bei mäßiger Erhitzung bildet sich aus dem Kaolin das Mineral *Kaolinit* mit der definierten Zusammensetzung Al₂O₃·2SiO₂·2H₂O. Da der Kaolin beim Brennen der erfindungsgemäßen Kohlenstoffsteine erhitzt wird und Kaolinit als Zwischenprodukt entsteht, wird diese definierte Zusammensetzung als Basis für die prozentualen Angaben zum Kaolin genommen. In der Beschreibung wird nur der Begriff Kaolin verwendet.

Der Erfindung liegt die Aufgabe zugrunde, dauerhafte Kohlenstoffsteine zur feuerfesten Auskleidung von Reduktionsöfen und Schmelzöfen zu schaffen, die nur einer geringen Abnutzung unterliegen, wenn sie mit geschmolzenem Eisen in Berührung kommen.
Bekannt ist, dass wenn die grünen Mischungen für Kohlenstoffsteine fein verteiltes metallisches Silizium enthalten, beim Brennvorgang, bevorzugt in der Bindemittelmatrix des geformten Körpers, feine Poren entstehen, während die Zugabe von Al₂O₃ diesbezüglich kaum Auswirkungen hat.
Überraschender Weise konnte jedoch festgestellt werden, dass beim Brennvorgang feine Poren, bevorzugt in der Bindemittelmatrix des geformten Körpers, entstehen wenn die grünen Mischungen für Kohlenstoffsteine kein elementares Silizium sondern Kaolin enthalten. Die so hergestellten Kohlenstoffsteine enthalten weniger als 25 Gew-% Mullit und sind mikroporös.
Die vorliegende Erfindung betrifft somit dauerhafte Kohlenstoffsteine zur feuerfesten Auskleidung von Reduktionsöfen und Schmelzöfen mit mehr als 50 Gew.-% Kohlenstoffanteil und weniger als 25 Gew-% Mullitanteil.
Desweiteren betrifft diese Erfindung einen Prozess zur Herstellung dieser dauerhaften Kohlenstoffsteine welcher durch Zugabe von maximal 45 Gew.-% Kaolin in die grüne Mischung gefolgt vom Brennen charakterisiert ist.
Gemäß einer weiteren Ausführungsform der vorliegenden Erfindung kann in die grüne Mischung zusätzlich zum Kaolin auch Silizium zugegeben werden. Sind beide Additive gleichzeitig in der grünen Mischung für Kohlenstoffsteine enthalten, so stören sich die beiden Komponenten in ihrer Wirkung nicht, sondern sie ergänzen sich, was sich an der Porendurchmesserverteilung ablesen lässt. Erfindungsgemäße Kohlenstoffsteine zur feuerfesten Auskleidung von Reduktionsöfen und Schmelzöfen mit mehr als 50 Gew.-% Kohlenstoffanteil und weniger als 25 Gew-% Mullitanteil sind supermikroporös, wenn maximal 45 Gew.-% Kaolin und maximal 10 Gew-% metallisches Silizium fein verteilt in die grünen Mischung für den Kohlenstoffstein eingebracht werden.

Es ist weiterhin Gegenstand der Erfindung, Kohlenstoffsteine zur feuerfesten Auskleidung von Reduktionsöfen und Schmelzöfen mit mehr als 50 Gew.-% Kohlenstoffanteil und weniger als 25 Gew.-% Mullitanteil bereitzustellen, indem die grüne Mischung mit feinverteiltem Kaolin, Silizium, Mullit und Siliziumcarbid versetzt wird. Dadurch erhält man nach dem Brennen Kohlenstoffsteine deren Porendurchmesserverteilungen ebenfalls im supermikroporösem Bereich eingeordnet werden können.

Gemeinsames Merkmal aller erfindungsgemäßen Ausführungsformen ist die Feinkörnigkeit der Nichtkohlenstoff-Additive, wobei das Maximalkorn für Kaolin und Silizium bei 200 µm und für Mullit und Siliziumcarbid bei 400 µm liegen darf.

Da Kohlenstoffsteine seit Jahrzehnten hergestellt und genutzt werden, sind die Rezepturen für Standardsteine bekannt. Dazu gehören auch die Trockenstoffe wie Anthrazite, Kokse oder künstliche Graphite oder deren Mischungen mit verschiedenen Kornbändern. Alternativ werden durchschnittlich gröbere, feinere oder feinste Kornbänder eingesetzt.

**Zu durchschnittlich gröberen Kornfraktionen gehören folgende typischen Gewichtsanteile:**

| | | |
|---|---|---|
| 4 bis 10 mm | mit | 0 bis 30 Gew.-%, |
| 1 bis 4 mm | mit | 0 bis 20 Gew.-%, |
| 0,4 bis 1 mm | mit | 0 bis 10 Gew.-% und |
| Staub feiner als 400 µm | mit | 0 bis 26 Gew.-%. |

**Zu durchschnittlich feineren Fraktionen gehören folgende typischen Gewichtsanteile:**

| | | |
|---|---|---|
| 1 bis 4 mm | mit | 0 bis 20 Gew.-%, |
| 0,8 bis 1 mm | mit | 0 bis 20 Gew.-%, |
| 0,4 bis 0,8 mm | mit | 0 bis 20 Gew.-% und |
| Staub feiner als 400 µm | mit | 0 bis 20 Gew.-%. |

**Zu den durchschnittlich feinsten Fraktionen gehören folgende typischen Gewichtsanteile:**

| | | |
|---|---|---|
| 0,8 bis 1 mm | mit | 0 bis 40 Gew.-%, |
| 0,4 bis 0,8 mm | mit | 0 bis 20 Gew.-%, |
| 0,2 bis 0,4 mm | mit | 0 bis 20 Gew.-% und |
| Staub feiner als 200 µm | mit | 0 bis 20 Gew.-%. |

Zur Herstellung der Kohlenstoffsteine wird zunächst 10 bis 45 Gew.-% feinkörniger Kaolin mit einer Kornverteilung von null bis 200 µm mit 55 bis 90 Gew.-% der oben genannten kohlenstoffhaltigen Trockenstoffe, die aus den genannten alternativen Kornbändern bestehen, gegebenenfalls mit Additiven, als Trockenmischung vermischt. Anschließend werden 15 bis 30 Gew.-% eines Kohlenstoff-Bindemittels zur Trockenmischung gegeben. Dieses Bindemittel kommt aus der Gruppe der erdöloder kohlebasierenden Bindemittel wie Teere, Peche oder Bitumen, daraus abgeleiteten Derivaten oder aus Kunstharzen aus der Gruppe der Phenol- oder Furanharze. Das erhaltene Gesamt-Gemisch wird auf eine Temperatur von 110 bis 170°C erhitzt und geknetet, um eine homogene Mischung zu erhalten. Danach wird das geknetete Gemisch zu Steinen geformt und verdichtet. Sodann werden die erhaltenen Formsteine in Koksgrus eingebettet und in geeigneten Öfen bei Temperaturen von 1 150 bis 1 400°C gebrannt und danach auf die gewünschten Maße bearbeitet.

Im Verlauf des Brennens gibt der Kaolin sein Kristallwasser ab und es entsteht Mullit. Am gebrannten Kohlenstoffstein kann überraschend eine Porendurchmesserverteilung nachgewiesen werden, die den Kohlenstoffstein als mikroporös kennzeichnen lässt. Vermutlich bilden sich während des Aufheizens die Mullitkristalle dergestalt, dass sie einen Grossteil der üblicherweise beim Brennen entstehenden großen Poren füllen und damit blockieren und so zu den gewünschten mikroporösen Strukturen führt. Es hat sich als günstig erwiesen, den Kaolin in einer solchen Menge zuzugeben, dass die Kohlenstoffsteine nach dem Brennen 5 bis 25 Gewichtsprozent Mullit enthalten.

Entsprechend einer weiteren Ausführungsform werden zur Herstellung der Kohlenstoffsteine zunächst 10 bis 45 Gew.-% feinkörniger Kaolin und 5 bis 10 Gew.-% feinkörniges metallisches Silizium jeweils mit einer Kornverteilung von null bis 200 µm mit 45 bis 85 Gew.-% der oben genannten kohlenstoffhaltigen Trockenstoffe, die aus den genannten alternativen Kornbändern bestehen, gegebenenfalls mit Additiven, als Trockenmischung vermischt. Anschließend werden 15 bis 30 Gew.-% eines oben beschriebenen Kohlenstoff-Bindemittels zugegeben und aus dieser Mischung, wie oben beschrieben, gebrannte Kohlenstoffsteine hergestellt. Diese weisen eine supermikroporöse Porendurchmesserverteilung auf.
Im Verlauf des Brennens reagieren die zwischen den Kohlenstoffkörnern verteilten Siliziumteilchen mit den Stoffen aus ihrer unmittelbaren Umgebung zu kryptokristallinem Siliziumcarbid. Das kryptokristalline Siliziumcarbid verstärkt die Bindung zwischen dem langsam verkokenden Bindemittel und den umgebenden Kohlenstoffkörnern, so dass dieser Verbund fester ist als es sich durch die Carbonisierung des Bindemittels alleine ergibt.

Eine SiC-Körnung mit wohl ausgebildeten Kristallen, die nicht während des Brennens entstehen, sondern als Komponente in die grüne Mischung gegeben wird, verhält sich anders als die kryptokristalline SiC-Körnung. Von diesen SiC-Kristallen geht keine Neubildung feiner Poren aus. Aus diesen Gründen ist ein Kohlenstoffstein, der aus einer grünen Mischung mit der Komponente "wohl ausgebildete Siliziumcarbid-Kristalle" gemacht wurde, nicht so gut für den Einsatz im metallurgischen Ofen geeignet, wie ein Kohlenstoffstein, der aus einer grünen Mischung mit der Komponente "fein verteiltes metallisches Silizium" gemacht wurde.
Eine entsprechende Betrachtung gilt für Mullit. Von diesen Mullit-Kristallen geht keine Bildung feiner Poren aus. Aus diesen Gründen ist ein Kohlenstoffstein, der aus einer grünen Mischung mit der Komponente "wohl ausgebildete Mullit-Kristalle" gemacht wurde, nicht so gut für den Einsatz im metallurgischen Öfen geeignet, wie ein Kohlenstoffstein, der aus einer grünen Mischung mit der Komponente "fein verteilter Kaolin" hergestellt wurde.
Kohlenstoffsteine, die aus einer grünen Mischung mit den Komponenten "wohl ausgebildetes Siliziumcarbid" und "wohl ausgebildete Mullit-Kristalle" hergestellt wurden, haben nur eine Standard-Porendurchmesserverteilung.

Werden also in die trockene grüne Mischung statt des Kaolins 5 bis 25 Gewichtsprozent Mullit in einer Kornverteilung von null bis 200µm und statt des metallischen Siliziums 5 bis 15 Gewichtsprozent Siliziumcarbid in einer Kornverteilung von null bis 200µm gegeben, so werden nach der beschriebenen Herstellungstechnik ebenfalls für den Hochofenprozess geeignete Kohlenstoffsteine erhalten. Allerdings haben diese Kohlenstoffsteine eine Standard-Porendurchmesserverteilung.

Werden jedoch in die grüne Mischung anteilig Kaolin und metallisches Silizium jeweils in Kornverteilungen von null bis 200 µm sowie Mullit und Siliziumcarbid jeweils in Kornverteilungen von null bis 400 µm gegeben, so wird ein Kohlenstoffstein erhalten, dessen Porendurchmesserverteilung zwischen der Standard-Porendurchmesserverteilung und der Porendurchmesserverteilung eines supermikroporösen Kohlenstoffsteins liegt.

Die folgenden Figuren und Beispiele erläutern die Erfindung näher.
Fig. 1 zeigt eine typische Standard-Porendurchmesserverteilung eines herkömmlichen Kohlenstoffsteins. Dargestellt ist das kumulierte Porenvolumen in Prozent über dem Porendurchmesser in Mikrometern. Den größten Anteil des Porenvolumens machen die Poren mit Durchmessern zwischen 8 und 30 Mikrometern aus.
Fig. 2 zeigt eine Porendurchmesserverteilung eines mikroporösen Kohlenstoffsteins. Dargestellt ist das kumulierte Porenvolumen in Prozent über dem Porendurchmesser in Mikrometern. Den größten Anteil des Porenvolumens machen die Poren mit Durchmessern zwischen 0,1 und 10 Mikrometern aus.
Fig. 3 zeigt eine Porendurchmesserverteilung eines supermikroporösen Kohlenstoffsteins. Dargestellt ist das kumulierte Porenvolumen in Prozent über dem Porendurchmesser in Mikrometern. Den größten Anteil des Porenvolumens machen die Poren mit Durchmessern zwischen 0,02 und 0,3 Mikrometern aus.
Fig. 4 gibt eine Zusammenschau der Porendurchmesserverteilungen der Figuren 1 bis 3 mit Kurve 1 für einen Standard-Kohlenstoffstein, mit Kurve 2 für einen mikroporösen Kohlenstoffstein und mit Kurve 3 für einen supermikroporösen Kohlenstoffstein.

### Beispiel 1:

Von einer Gesamtmischung sind 60 Gew.-% calcinierter Anthrazit, 25 Gew.-% künstlicher Graphit, 15 Gew.-% Kaolin und zuzüglich 25 Teile Steinkohlenteerpech mit einem Erweichungspunkt von 80°C. Die kohlenstoffhaltigen Feststoffe Anthrazit und künstlicher Graphit liegen in der in Tabelle 1 beschriebenen Kornverteilung vor. Der Kaolin liegt in einem Kornband von null bis 200µm vor. Die Gesamtmischung wird für die Dauer von zwei Stunden bei einer Temperatur von 140 bis 150°C in einer Knetvorrichtung geknetet. Danach wird das erhaltene Gemisch in einer Form mit Hilfe der bekannten Rütteltechnik unter Anlegen eines Unterdruckes zwecks Entlüftung der grünen Mischung zu einem Block der Abmessungen 2500 x 700 x ca. 500 mm³ verdichtet. Der Block wird auf konventionelle Art im Ringofen in einer Kokspackmasse bei Temperaturen bis 1300°C gebrannt. Am gebrannten Material wird eine Porendurchmesserverteilung festgestellt wie sie in Fig. 2 gezeigt wird. Kohlenstoffsteine mit einer solchen Porendurchmesserverteilung nennt man mikroporös.

**Tabelle 1**

| Körngröße (mm) der Kohlenstoffe | Anteil (%) |
|---|---|
| 1 bis 4 | 36 |
| 0,8 bis 1 | 18 |
| 0,4 bis 0,8 | 10 |
| < 0,40 | 36 |
| | |
| zuzügliches Bindemittel | 25 Teile |

### Beispiel 2:

Von einer Gesamtmischung sind 50 Gew.-% calcinierter Anthrazit, 25 Gew.-% künstlicher Graphit, 15 Gew.-% Kaolin, 10 Gew.-% Silizium und zuzüglich 25 Teile Steinkohlenteerpech mit einem Erweichungspunkt von 80°C. Die kohlenstoffhaltigen Feststoffe Anthrazit und künstlicher Graphit liegen in der in Tabelle 1 beschriebenen Kornverteilung vor. Der Kaolin und das Silizium liegen in einem Kornband von null bis 200µm vor. Die Gesamtmischung wird für die Dauer von zwei Stunden bei einer Temperatur von 140 bis 150°C in einer Knetvorrichtung geknetet. Danach wird das erhaltene Gemisch in einer Form mit Hilfe der bekannten Rütteltechnik unter Anlegen eines Unterdruckes zwecks Entlüftung der grünen Mischung zu einem Block der Abmessungen 2500 x 700 x ca. 500 mm³ verdichtet. Der Block wird auf konventionelle Art im Ringofen in einer Kokspackmasse bei Temperaturen bis 1300°C gebrannt. Am gebrannten Material wird eine Porendurchmesserverteilung festgestellt wie sie in Fig. 3 gezeigt wird. Kohlenstoffsteine mit einer solchen Porendurchmesserverteilung nennt man supermikroporös.

## Patentansprüche

1. Dauerhafte Kohlenstoffsteine zur feuerfesten Auskleidung von Reduktionsöfen und Schmelzöfen, die mehr als 50 Gew.-% Kohlenstoff enthalten, sowie Mullit, wobei der Mullitgehalt niedriger als 25 Gew.-% ist, **dadurch gekennzeichnet, dass** die Kohlenstoffsteine supermikroporös sind.

2. Dauerhafte Kohlenstoffsteine nach Anspruch 1, **dadurch gekennzeichnet, dass** die Hochofensteine 5 bis 25 Gew.-% Mullit enthalten.

3. Dauerhafte Kohlenstoffsteine nach den Ansprüchen 1 oder 2, **dadurch gekennzeichnet, dass** die Hochofensteine 5 bis 10 Gew.-% Siliziumcarbid enthalten.

4. Verfahren zum Herstellen von dauerhaften Kohlenstoffsteinen nach einem oder mehreren der Ansprüche 1 bis 3, **gekennzeichnet durch** die Schritte Mischen von definierten Kornfraktionen aus der Gruppe der Anthrazite, Kokse oder künstlichen Graphite oder deren Mischungen, der Additive, der erdöl- oder kohlebasierenden Bindemitteln aus der Gruppe der Teere, Peche, Bitumen, daraus abgeleiteten Derivaten oder der Kunstharze aus der Gruppe der Phenol- oder Furanharze, gefolgt Formgeben, Verdichten, Verkoken und schließlich Bearbeiten, **dadurch** gekennzeichnet, dass in die grünen Mischungen 10 bis 45 Gew.-% Kaolin und 5 bis 10 Gew.-% Silizium eingemischt werden.

5. Verfahren nach Anspruch 4, **dadurch gekennzeichnet, dass** zur grünen Mischung ein Kaolin in einer Kornverteilung von null bis 200µm zugegeben wird.

6. Verfahren nach einem oder mehreren der Ansprüche 4 oder 5 **dadurch gekennzeichnet, dass** zur grünen Mischung zusätzlich Silizium in einer Kornverteilung von null bis 200µm zugegeben werden.

7. Verfahren nach einem oder mehreren der Ansprüche 4 bis 6, **dadurch gekennzeichnet, dass** in die grünen Mischungen zusätzlich Mullit und Siliziumcarbid eingemischt werden.

8. Verfahren nach einem oder mehreren der Ansprüche 4 bis 7 **dadurch gekennzeichnet, dass** zur grünen Mischung zusätzlich Mullit in einer Kornverteilung von null bis 400µm und Siliziumcarbid in einer Kornverteilung von null bis 400µm zugegeben werden.

## Claims

1. Long-lasting carbon bricks for the fireproof lining of reduction furnaces and smelting furnaces, containing more than 50 wt.% carbon, as well as mullite, the mullite content being less than 25 wt.%, **characterised in that** the carbon bricks are supermicroporous.

2. Long-lasting carbon bricks according to claim 1, **characterised in that** the blast furnace bricks contain from 5 to 25 wt.% mullite.

3. Long-lasting carbon bricks according to either claim 1 or claim 2, **characterised in that** the blast furnace bricks contain from 5 to 10 wt.% silicon carbide.

4. Method for producing long-lasting carbon bricks according to one or more of claims 1 to 3, **characterised by** the steps of mixing specified grain size fractions from the group of anthracites, cokes or artificial graphites or mixtures thereof, additives, petroleum- or carbon-based binders from the group of tars, pitches, bitumen, derivatives derived therefrom or synthetic resins from the group of phenol resins orfuran resins, followed by shaping, compacting, coking, and finally processing, **characterised in that** from 10 to 45 wt.% kaolin and from 5 to 10 wt.% silicon are mixed into the green mixtures.

5. Method according to claim 4, **characterised in that** a kaolin is added to the green mixture in a grain size distribution of from zero to 200 µm.

6. Method according to one or more of claims 4 or 5, **characterised in that** silicon is additionally added to the green mixture in a grain size distribution of from zero to 200 µm.

7. Method according to one or more of claims 4 to 6, **characterised in that** mullite and silicon carbide are additionally mixed into the green mixtures.

8. Method according to one or more of claims 4 to 7, **characterised in that** mullite is added to the green mixture in a grain size distribution of from zero to 400 µm and silicon carbide is added to the green mixture in a grain size distribution of from zero to 400 µm.

## Revendications

1. Briques de carbone résistantes pour l'habillage réfractaire de fours de réduction et de fours de fusion qui contiennent plus de 50 %-poids de carbone, ainsi que de la mullite, dans lesquelles la teneur en mullite est inférieure à 25 %-poids, **caractérisées en ce que** les briques de carbone sont super microporeuses.

2. Briques de carbone résistantes selon la revendication 1, **caractérisées en ce que** les briques de haut fourneau contiennent 5 à 25 %-poids de mullite.

3. Briques de carbone résistantes selon les revendications 1 ou 2, **caractérisées en ce que** les briques de haut fourneau contiennent 5 à 10 %-poids de carbure de silicium.

4. Procédé de fabrication de briques de carbone résistantes selon l'une ou plusieurs des revendications 1 à 3, **caractérisé par** les étapes de mixage de fractions granulométriques définies issues du groupe des anthracites, des cokes ou des graphites synthétiques ou de leurs mélanges, des additifs, des liants à base de pétrole ou de charbon issus du groupe des goudrons, des brais, des bitumes, de dérivés qui en sont tirés ou des résines synthétiques issues du groupe des résines phénoliques ou furaniques, suivi du façonnage, du compactage, de la cokéfaction et enfin du traitement, **caractérisé en ce que** 10 à 45 %.poids de kaolin et 5 à 10 %-poids de silicium sont introduits dans les mélanges verts.

5. Procédé selon la revendication 4, **caractérisé en ce qu'**un kaolin est ajouté au mélange vert à raison d'une granulométrie de zéro à 200 µm.

6. Procédé selon l'une ou plusieurs des revendications 4 ou 5, **caractérisé en ce que** du silicium est ajouté en plus au mélange vert à raison d'une granulométrie de zéro à 200 µm.

7. Procédé selon l'une ou plusieurs des revendications 4 à 6, **caractérisé en ce que** de la mullite et du carbure de silicium sont introduits en plus dans les mélanges verts.

8. Procédé selon l'une ou plusieurs des revendications 4 à 7, **caractérisé en ce que** de la mullite à raison d'une granulométrie de zéro à 400 µm et du carbure de silicium à raison d'une granulométrie de zéro à 400 µm sont ajoutés en plus au mélange vert.
